Europäisches Patentamt

European Patent Office

Office européen des brevets

(11) Veröffentlichungsnummer: **0 045 845**
**B1**

(12) **EUROPÄISCHE PATENTSCHRIFT**

(45) Veröffentlichungstag der Patentschrift: **10.09.86**

(51) Int. Cl.⁴: **G 01 C 22/02**

(21) Anmeldenummer: **81105173.9**

(22) Anmeldetag: **03.07.81**

(54) Überwachungseinrichtung zur Abgabe eines Warnsignals in Abhängigkeit von einem Zählergebnis.

(30) Priorität: **08.08.80 DE 3030057**

(43) Veröffentlichungstag der Anmeldung:
**17.02.82 Patentblatt 82/07**

(45) Bekanntmachung des Hinweises auf die
Patenterteilung:
**10.09.86 Patentblatt 86/37**

(84) Benannte Vertragsstaaten:
**FR GB IT SE**

(56) Entgegenhaltungen:
**FR-A-1 494 731**
**US-A-3 925 754**

(73) Patentinhaber: **VDO Adolf Schindling AG**
**Gräfstrasse 103**
**D-6000 Frankfurt/Main (DE)**

(72) Erfinder: **Hauschild, Wolfgang**
**Kastanienhain 29**
**D-6232 Bad Soden (DE)**
Erfinder: **Kruck, Dieter**
**Im Exboden 35**
**D-6271 Idstein-Heftrich (DE)**

(74) Vertreter: **Könekamp, Herbert, Dipl.-Ing.**
**Sodener Strasse 9**
**D-6231 Schwalbach (DE)**

Courier Press, Leamington Spa, England.

**Beschreibung**

Die Erfindung betrifft eine Überwachungseinrichtung zur Abgabe eines Warnsignals durch einen Alarmgeber in Abhängigkeit von dem Zählergebnis eines Zählwerks nach dem Oberbegriff des Anspruchs 1.

Insbesondere in Verbindung mit elektrisch angetriebenen Tachometern in Fahrzeugen besteht der Wunsch, nach einer vorgegebenen zurückgelegten Strecke, ein Warn-signal zu erzeugen, das beispielsweise die Durchführung bestimmter Wartungs- oder Überprüfungsarbeiten signalisiert. Ein hierzu vorgesehenes elektromotorisch angetriebenes Zählwerk enthält eine Rolle oder Walze, die beispielsweise jeweils beim Erreichen von 10.000 Zähleinheiten — Kilometern — eine 90°-Drehung zurücklegt und in dieser Stellung einrastet. Dies bedeutet, daß ausgehend von einer Ausgangsstellung bei einer Rollenstellung von 90° 10.000 Kilometer angezeigt werden, bei einer Rollenstellung von 180° 20.000 Kilometer, bei einer Rollenstellung von 270° 30.000 Kilometer, bei einer Rollenstellung von 360° oder 0° 40.0000 Kilometer und — bei einem zweiten Einlauf der Rolle in die 90°-Stellung 50.000 Kilometer.

Es ist bereits eine Überwachungseinrichtung bekannt (US—A—39 25 754), bei der diese Schaltung mittels eines auf der Rolle sitzenden Nockens und eines mit diesem zusammenwirkenden Tastschalters realisiert ist. Dies bringt den Nachteil mit sich, daß nicht die Zahlenrollen selbst eines Rollenzählwerks benutzt werden können, da die Anbringung eines Nockens auf diesen deren Ablesbarkeit ungünstig beeinflußt.

Wenn darüber hinaus bei einem derartigen Zählwerk mit einem Abtastorgan eine höhere Zählstellung überwacht werden soll, besteht das Problem, daß die Rolle die diesem höheren Zählwert zugeordnete Rollenstellung nicht nur bei diesem höheren Zählwert, sondern auch zuvor bei einem niedrigeren Zählwert bei einer früheren Umdrehung erreicht. Im voranstehenden Beispiel bedeutet dies, daß die Rollenstellung für den Zählwert 50.000 Kilometer zuvor bei einem ersten Umlauf der Rolle schon beim Erreichen von 10.000 Kilometern auftritt.

Der vorliegenden Erfindung liegt nun die Aufgabe zugrunde eine derartige Überwachungseinrichtung zu schaffen. die bei Überwachung höherer Zählwerte, bei denen die Rolle des Zählwerks mehr als eine Umdrehung zurückgelegt hat, keine Fehlwarnung bei einem niedrigeren Zählwert erzeugt, und bei der die Bewegung des Zählwerks durch die Überwachungseinrichtung möglichst wenig gehemmt wird, um das Zählwerk durch einen Motor mit niedrigem Drehmoment störungsfrei antreiben zu können. Hierzu soll die Abtastung der Rollenstellung durch das Abtastorgan vorzugsweise berührungsfrei erfolgen.

Diese Aufgabe wird bei der erfindungsgemäßen Überwachungseinrichtung durch die in dem kennzeichnenden Teil des Anspruchs 1 angegebenen Mittel gelöst.

Durch die erfindungsgemäß vorgesehene in Abhängigkeit von der Rollenstellung gesteuerte Aktivierungsschaltungsanordnung wird ohne Beeinflussung der Rolle erreicht, daß das Abtastorgan nach dem Erreichen der vorgegebenen Rollenstellung, die sowohl einem höheren als auch einem niedrigeren Zählwert zugeordnet ist, nur den höheren Zählwert nicht aber den niedrigeren Zählwert zuverlässig meldet. In dem oben genannten Beispiel erfolgt dabei also keine Meldung, die eine Fehlmeldung darstellen würde, wenn die Rolle von dem Zählwert 9999 auf 10.000 Einheiten springt. Vielmehr erfolgt die Warnung erst beim Erreichen von 50.000 Zähleinheiten.

Bei einem Aufbau der Überwachungseinrichtung nach dem Prinzip, daß die Abgabe des ersten stellungsabhängigen Signals, wenn die Rolle die vorgegebene Rollenstellung bei dem niedrigeren Zählerstand erreicht, unwirksam gemacht wird, ist im einzelnen eine Ausbildung der Aktivierungsschaltungsanordnung nach Anspruch 2 mit einem zweiten Abtastorgan vorgesehen, welches in der angegebenen Wiese angeordnet ist. Mit dem zweiten Abtastorgan ist ein speicherndes Schaltglied verbunden, welches das erste Abtastorgan noch nicht aktiviert, solange nicht das zweite Abtastorgan eine Stellung der Rolle nach einem ersten Einlauf der Rolle in die vorgegebene Rollenstellung signalisiert hat. Erst danach aktiviert das speichernde Schaltglied der Aktivierungsschaltungsanordnung das erste Abtastorgan, welches beim Erreichen der vorgegebenen Rollenstellung in dem zweiten Umlauf, wobei die vorgegebene Rollenstellung dem höheren Zählwert entspricht, die Erzeugung eines stellungsabhängigen Signals durch das erste Abtastorgan ermöglicht. Dieses von dem ersten Abtastorgan erzeugte stellungsabhängige Signal löst dann den Alarmgeber aus.

Vorzugsweise ist dabei zwischen dem ersten Abtastorgan und dem Alarmgeber ein zweites speicherndes Schaltglied angeordnet. Das zweite speichernde Schaltglied speichert das von dem ersten Abtastorgan abgegebene erste stellungsabhängige Signal zur Betätigung des Alarmgebers auch dann, wenn die Rolle die vorgegebene Rollenstellung wieder verlassen hat oder wenn die Überwachungseinrichtung beispielsweise beim Abstellen des Fahrzeugs ausgeschaltet wird und erst zu einem beliebigen späteren Zeitpunkt wieder eingeschaltet wird. Die einmal ausgelöste Warnung kann also nicht mehr selbsttätig unbeabsichtigt verlöschen.

Jedes speichernde Schaltglied kann elektromechanisch ausgebildet sein, ist aber vorzugsweise gemäß Anspruch 4 ausgeführt, da diese Ausführung bei geringem Aufwand eine besonders zuverlässige Langzeitspeicherung ermöglicht.

Eine besonders wenig aufwendige Ausbildung der Überwachungseinrichtung, die mit einem einzigen Abtastorgan auskommt, ist mit Anspruch 5 angegeben. In dieser Ausbildung ist die Aktivierungsschaltungsanordnung so ausgebildet, daß sie das von dem ersten Abtastorgan abgegebene erste stellungsabhängige Signal beim Einlauf der Rolle in die vorgegebene Rollenstellung nur dann an den Alarmgeber weiterleitet, wenn die Rolle so oft umgelaufen ist, daß sie die Rollenstellung für den höheren Zählwert erreicht hat. Insbesondere erfolgt diese Weiterleitung nach Abschluß des ersten Umlaufs der Rolle. Die hierzu vorgesehene Aktivierungsschaltungsanordnung umfaßt insbesondere eine Schaltung, die in der Art einer logischen UND-Verknüpfung aufgebaut ist. Diese Schaltung speichert zunächst aber das Auftreten des ersten von dem ersten Abtastorgan abgegebenen Signals, so daß die Verknüpfung auch dann durchgeführt wird, wenn bei einem erneuten Umlauf der Rolle das Signal von dem ersten Abtastorgan zum zweiten Mal neu abgegeben wird. Erst in diesem Fall wird die Warneinrichtung in Betrieb gesetzt.

Bei einer Ausbildung der Aktivierungsschaltungsanordnung mit einem zweiten speichernden Schaltglied gemäß Anspruch 6 wird auch das Ergebnis der UND-Verknüpfung festgehalten, sobald das erste Abtastorgan das zweite Erreichen der vorgegebenen Rollenstellung bei dem höheren Zählwert signalisiert hat. In Folge der Eigenart des bereits voranstehend kurz beschriebenen speichernden Schaltglieds, welches mit einer Sicherung in einer Kollektor-Emitterstrecke eines Transistors aufgebaut ist, die bei leitendem Transistor durchbrennt, erfolgt die Weiterleitung des Signals von der Aktivierungsschaltungsanordnung als auch dann erneut auftretendes Dauersignal, wenn die gesamte Überwachungseinrichtung zwischenzeitlich abgeschaltet wird.

Im einzelnen ist die Überwachungseinrichtung mit der Aktivierungsschaltungsanordnung, die die Weiterleitung des von dem ersten Abtastorgans abgegebenen Signals an den Alarmgeber steuert, zweckmäßig gemäß Anspruch 7 mit herkömmlichen Bauelementen aufgebaut. Diese Überwachungseinrichtung kann auch zur Alarmabgabe bei solchen Zählwerten problemlos abgewandelt werden, wenn bereits ein Zählwert während des ersten Umlaufs der Zahlenrolle signalisiert werden soll.

Um auch durch das Einschalten der Stromversorgung beispielsweise bei der Inbetriebnahme des Fahrzeugs keine Fehlmeldung zu erzeugen, ist die Maßnahme nach Anspruch 8 vorgesehen, nach der bestimmte Baugruppen verzögert eingeschaltet werden, nachdem das Abtastorgan und andere Pulserzeuger ihren stationären Zustand erreicht haben.

In besonders zuverlässiger Weise erfolgt die Abtastung des Rollenstandes berührungsfrei mit einem als Hall-Generator ausgebildeten Abtastorgan nach Anspruch 9.

Es sind jedoch auch andere Abtastorgane in Verbindung mit der beschriebenen Überwachungseinrichtung verwendbar, insbesondere ein fotoelektrisches Abtastorgan, welches ebenfalls die Rolle des Zählerwerks nicht belastet und berührungsfrei arbeitet.

Weitere Vorteile und Merkmale der Erfindung ergeben sich aus der nachfolgenden Beschreibung mit 6 Figuren, in der die Erfindung näher erläutert ist. Es zeigt:

Fig. 1 die Konfiguration der Rolle bzw. Walze zu einem ersten und zweiten Abtastorgan in der ersten Ausführungsform der Erfindung,

Fig. 2 ein Blockschaltbild der ersten Ausführungsform,

Fig. 3 ein detaillierteres Schaltbild zu dem Blockschaltbild nach Fig. 2,

Fig. 4 ein zweites Blockschaltbild einer zweiten Ausführungsform der Erfindung,

Fig. 5 eine detailliertere Schaltung des Blockschaltbilds nach Fig. 4 und

Fig. 6 ein Ablaufdiagramm der Schaltungsanordnung nach den Fig. 4 und 5.

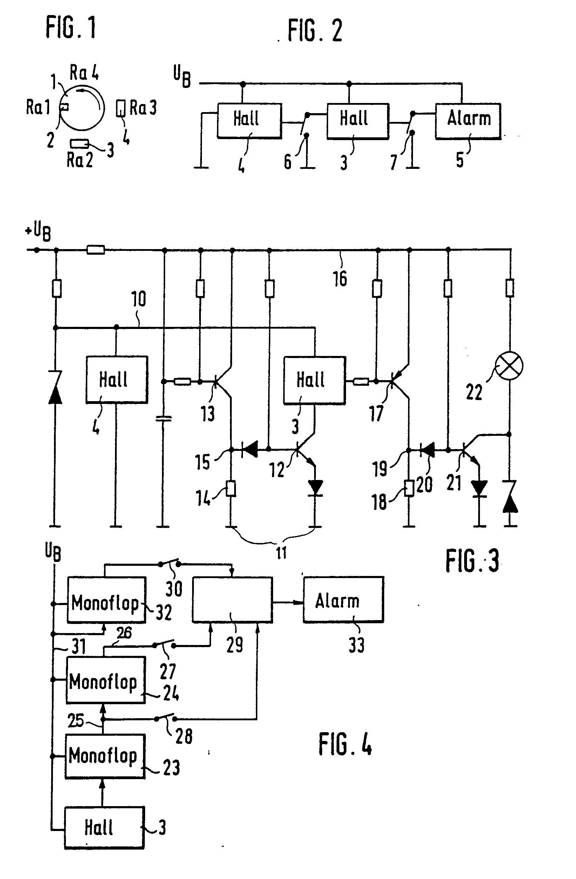

In Fig. 1 ist mit 1 die Rolle bzw. Walze mit nicht dargestellten Antriebsmitteln bezeichnet. An den Umfang der Rolle ist ein Dauermagnet 2 eingelassen, der mit Hall-Elementen 3 und 4 zusammenwirkt. Die Hall-Elemente 3 und 4 bilden das erste bzw. das zweite Abtastorgan.

Die Rolle ist aus der Ausgangslage bei Ra 1 in Pfeilrichtung um 90°-Schritte drehbar, wobei jeder Schritt 10.000 Zähleinheiten entspricht. Bei der Raststellung Ra 2 sind somit 10.000 Zähleinheiten erreicht, und wenn die Rolle zum zweiten Mal umläuft, 50.000 Zähleinheiten.

Diese Raststellung wird im folgenden auch als vorgegebene Rollenstellung bezeichnet. In der Raststellung Ra 3 sind beim ersten Umlauf der Rolle 20.000 Zähleinheiten erreicht und bei der Raststellung Ra 4 30.000 Zähleinheiten während des ersten Umlaufs. — Das erste Abtastorgan 3 ist nun so angeordnet, daß es die Rollenstellung bei Ra 2 erfaßt, während das zweite Abtastorgan 4 zur Erfassung der Rollenstellung bei Ra 3 angeordnet ist.

In dem Blockschaltbild in Fig. 2 ist dargestellt, wie die Abtastorgane 3 und 4 untereinander und mit einem Alarmgeber 5 verbunden sind. Der Alarmgeber 5 ist durch ein erstes speicherndes Schaltglied 6 aktivierbar, welches von dem zweiten Abtastorgan 4 betätigt wird. Das erste Abtastorgan 3 wiederum betätigt ein zweites speicherndes Schaltglied 7, um ein Signal zu dem Alarmgeber 5 abzugeben.

Diese Überwachungseinrichtung arbeitet in der Weise, daß zunächst in der Ruhestellung, s. Fig. 1, die speichernden Schaltglieder geöffnet sind, s. fig. 2. Nach 10.000 Zähleinheiten gerät der Magnet 2 in den Bereich des ersten Abtastorgans 3, welches jedoch keinen Impuls abgibt, da dieses Abtastorgan bei geöffnetem ersten Schaltglied nicht aktiv werden kann. Wenn die Rolle um 90° weiterdreht, erreicht der Magnet 2 das zweite Abtastorgan 4, welches daraufhin das erste speichernde Schaltglied 6 schließt und damit das erste Abtastorgan zur Abgabe eines Impulses vorbereitet. Diese Impulsabgabe erfolgt erste, wenn der Magnet über die Nullstellung Ra 1 hinaus zum zweiten Mal die vorgegebene Rollenstellung Ra 2 erreicht, und zwar bei dem zweiten Umlauf zu einem Zählwert von 50.000 Zähleinheiten. Jetzt bewirkt das erste Abtastorgan 3 das Schließen des zweiten speichernden Schaltglieds 7, welches den Alarmgeber in Betrieb setzt.

Der Alarmgeber bleibt auch dann eingeschaltet, wenn der Dauermagnet 2 durch die Rolle 1 aus dem Bereich des ersten Abtastorgans 3 herausgedreht wird oder wenn eine vorübergehende Stromunterbrechung an der Stromversorgungsleitung 8 eintritt.

In Fig. 3 ist im einzelnen dargestellt, wie das zweite Abtastorgan 4, das Hall-Element, mit dem ersten Abtastorgan 3, ebenfalls einem Hall-Element, in Verbindung steht, damit das zweite Abtastorgan nur den höherwertigen Zählwert erfaßt und bei dessen Erreichen einen Alarm auslöst:

Hierzu wird das zweite Abtastorgan 3 nur dann an eine stabilisierte Betriebsspannung, die zwischen der Leitung 10 und dem Erdpotential 11 liegt, durchgeschaltet, wenn ein Transistor 12 in den leitenden Zustand gebracht ist. Dieses Öffnen des Transistors 12, in dessen Kollektor-Emitterstrecke das erste Abtastorgan 3 eingeschaltet ist, erfolgt dann, wenn der Magnet 2 in Fig. 1 die Stellung Ra 3 erreicht und hierbei das zweite Abtastorgan 4 zur Abgabe eines Ausgangssignals veranlaßt, welches einen Transistor 13 in den leitenden Zustand schaltet. Dadurch schmilzt eine in der Kollektor-Emitterstrecke des Transistors 13 angeordnete Sicherung 14, so daß ein Verbindungspunkt 15 zwischen der Sicherung und dem Kollektor des Transistors 13 nicht mehr auf Erdpotential sondern auf dem Potential der Leitung 16 mit einer positiven Batteriespannung liegt, wodurch die Kollektor-Emitterstrecke des Transistors 12 ebenfalls leitend wird. — Die Sicherung 14, die bei der ersten Abgabe eines Ausgangsimpulses von dem zweiten Abtastorgan 4 unterbrochen wird, stellt somit in Verbindung mit dem Transistor 13 ein speicherndes Schaltglied dar, welches seine geöffnete Stellung unabhängig von dem weiteren Signalverlauf des von dem zweiten Abtastorgan 4 abgegebenen Signals und unabhängig von einer Unterbrechung der Spannung auf der Leitung 16 beibehält.

Da das erste Abtastorgan 3 erst aktiviert ist, wenn der Magnet 2 die Stellung Ra 3 passiert hat, kann dieses erste Abtastorgan erst dann ein erstes stellungsabhängiges Signal abgeben, wenn der Magnet 2 das erste Abtastorgan in der Stellung Ra 2 der Rolle 1 zum zweiten Mal erreicht. In diesem Fall gelangt das erste stellungsabhängige Signal an einem Ausgang des ersten Abtastorgans 3 zu einer Basis eines weiteren Transistors 17, der damit in den leitenden Zustand gesteuert wird, um eine in seiner Kollektor-Emitterleitung eingeschaltete zweite Sicherung 18 schmelzen zu lassen. Der Transistor 17 mit der Sicherung 18 stellt somit ein zweites speicherndes Schaltglied dar. Nach dem Schmelzen der Sicherung erscheint an einem gemeinsamen Verbindungspunkt 19 zwischen dem Kollektor des Transistors 17 und der Sicherung 18 das Potential der Leitung 16, welches einen Alarmgeber über eine Diode 20 einschaltet, der im wesentlichen durch einen Transistor 21 und eine in dessen Kollektor-Emitterkreis angeordnete Alarmlampe 22 besteht.

Die übrigen in Fig. 3 nicht besonders bezeichneten Bauelemente dienen im wesentlichen zur Einstellung der Arbeitspunkte der beschriebenen Transistoren.

Die Variante der Überwachungseinrichtung nach Fig. 4 arbeitet unter der Verwendung nur eines ersten Abtastorgans, welches in Fig. 1 an der Rollenstellung Ra 2 angeordnet ist. Das zweite Abtastorgan an der Rollenstellung Ra 3 entfällt hier also.

Das erste Abtastorgan, das ebenfalls als Hall-Element ausgebildet ist, mit dem Bezugszeichen 3 steht an seinem Ausgang mit dem Eingang eines ersten Monoflops 23 in Verbindung, dessen Ausgang wiederum zu dem Eingang eines zweiten Monoflops 24 geschaltet ist. Der Ausgang 25 des ersten Monoflops und der Ausgang 26 des zweiten Monoflops stehen über jeweils ein erstes Schaltglied 27 und ein zweites Schaltglied 28 mit einer Auswertelektronik 29 in Verbindung. Die Auswertelektronik erhält ihre Betriebsspannung über einen Schalter 30 von einer Stromversorgungsleitung 31. Der Schalter 30 wird dabei durch ein drittes Monoflop, dessen Eingang mit der Stromversorgungsleitung in Verbindung steht, eingeschaltet.

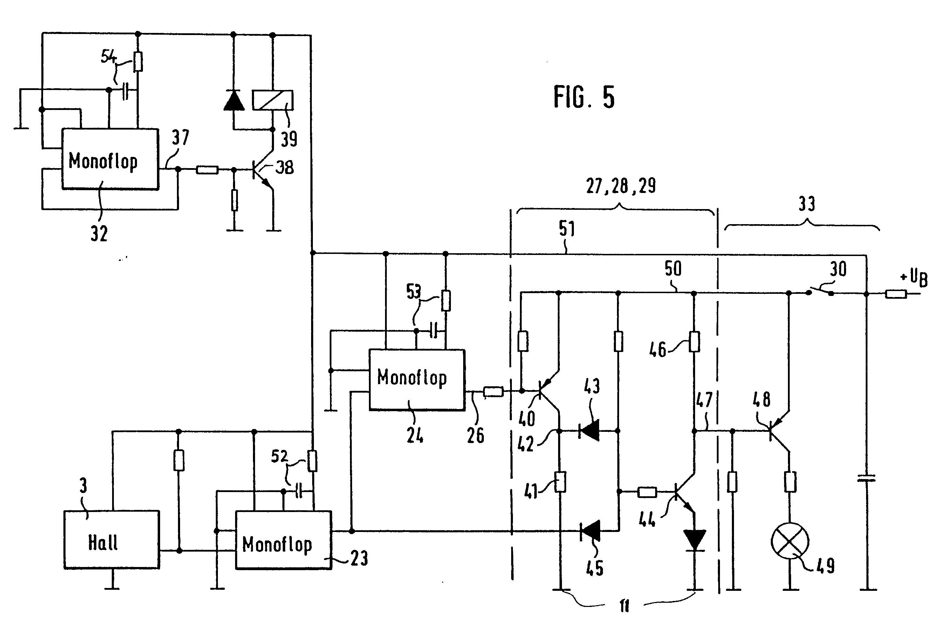

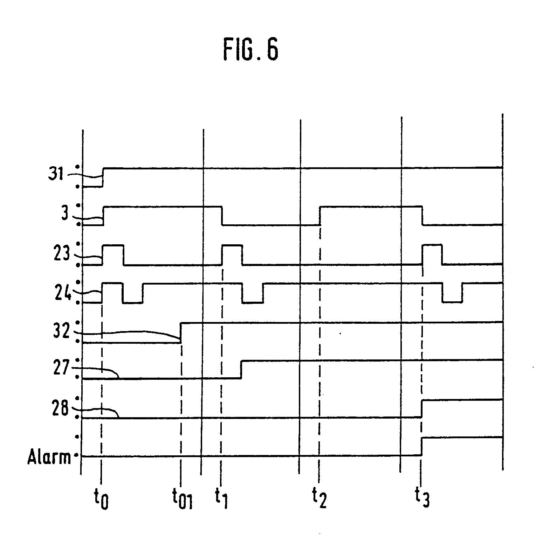

Die Schaltungsanordnung nach Fig. 4 arbeitet im wesentlichen in der Weise, daß bei Auftreten eines ersten stellungsabhängigen Signals an dem ersten Abtastorgan 3 das erste Monoflop 23 einen ersten Impuls an dem Ausgang 25 abgibt, siehe Zeitpunkt $t_1$ in Fig. 6. Dieser Impuls bewirkt, wie noch weiter unten anhand Fig. 5 erläutert wird, noch kein Schließen des zweiten Schaltglieds 28, sondern stößt das Monoflop 24 an, welches daraufhin das erste Schaltglied 27 dauernd schließen läßt, siehe Impulszug 27 in Fig. 6. Im einzelnen bewirkt jeweils die negative Flanke des von dem Abtastorgan 3 abgegebenen Impulses und des von dem ersten Monoflop 23 abgegebenen Impulses die Umschaltung der mit ihnen verbundenen Einrichtungen. Da die Auswertelektronik 29 noch kein Signal von dem zweiten Schaltglied 28 erhalten hat, erfolgt noch keine Signalabgabe.

Erst wenn die Rolle zum zweiten Mal die vorgegebene Rollenstellung erreicht, und zwar jetzt bei dem höheren Zählwert und erneut einen Impuls mit einer negativen Flanke als erstes stellungsabhängiges Signal abgibt, vergleiche Zeitpunkt $t_3$ in Fig. 6, wird auch das zweite Schaltglied 28 geschlossen, so daß ein Impulszug in Fig. 6 erscheint, der durch dir Auswertelektronik 29 auf die Alarmeinrichtung 33 übertragen wird und diese einen Alarm auslöst. Der Alarm wird dauernd beibehalten, da die Schaltglieder 27 und 28 nicht mehr öffnen.

In Fig. 6 ist noch zum Zeitpunkt $t_2$ dargestellt, daß eine positive Flanke des von dem ersten Abtastorgan 3 abgegebenen stellungsabhängigen Signals keine signalabgabe an den Ausgängen 25 und 26 der Monoflops 23 und 24 hervorruft.

Ferner zeigt Fig. 6, daß Ausgangssignale auf den Ausgängen 25 und 26 der Monoflops 23 und 24, die beim Einschalten der Betriebsspannung an der Leitung 31 zum Zeitpunkt $t_0$ entstehen, ohne Einfluß auf die Alarmabgabe sind, da die Auswertelektronik und die mit ihr verbundenen Schaltglieder 27 und 28 erst dann wirksam werden, wenn die Impulse der Monoflops infolge des Einschaltens der Betriebsspannung abgeklungen sind. Hierzu gibt das Monoflop 32 erst zum Zeitpunkt $t_{01}$ an den Schalter 30 ein einschaltendes Signal ab. Die Ausgangssignallänge des Monoflops 32 beträgt dabei etwa das Vierfache der Ausgangssignallänge der Monoflops 23 und 24.

In der detaillierteren Fig. 5 sind die Schaltelemente mit den gleichen Bezugszeichen wie in Fig. 4 versehen, soweit sie übereinstimmen. Mit unterbrochenen Linien ist in Fig. 5 außerdem angedeutet, in welchem Schaltungsbereich das erste und das zweite Schaltglied 27, 28 und die Auswertelektronik 29 realisiert sind. Ein weiterer Schaltungsabschnitt in Fig. 5 bildet die Alarmeinrichtung 33.

Aus Fig. 5 ist zu jedem Monoflop eine Widerstandskondensatorkombination 52, 53 bzw. — 54 ersichtlich, die die Impulslänge des abgegebenen Impulses am Ausgang des Monoflops bestimmt. Der Ausgang 37 des Monoflops 32 steht über einen Transistor 38 mit einem Relais 39 in Verbindung, welches die Betriebsspannung an die Schaltglieder 27, 28, die Auswertelektronik 29 und den Alarmgeber 33 anlegt.

Das erste Schaltglied 27 ist durch einen Transistor 40 in Verbindung mit einer Sicherung 41 in dessen Kollektor-Emitterkreis gebildet, die bei leitendem Transistor durchbrennt. Ein gemeinsamer Verbindungspunkt 42 zwischen der Sicherung 41 und dem Kollektor des Transistors 40 steht über eine Diode 43 mit der Basis eines weiteren Transistors 44 in Verbindung. Die derart angekoppelte Diode 43 bildet einen ersten speichernden Eingang eines Schaltungsteils, welches zusammen mit einer zweiten Diode 45 die Funktion eines UND-Glieds hat, da der Transistor 44 leitet, wenn sowohl an dem gemeinsamen Verbindungspunkt 42 als auch an dem Ausgang 25 des ersten Monoflops 23, zu dem die Diode 45 führt, ein positives Potential anliegt.

Der Schaltungsteil 27, 28, 29 arbeitet in der Weise, daß bei einem ersten stellungsabhängigen Signal an dem Ausgang 25 des Monoflops 23 der Transistor 44 nicht durchgeschaltet wird, da seine Basis über die Diode 43 auf Null-Potential liegt. Erst wenn mit der negativen Flanke des Monoflops 23 über das Monoflop 24 nach dem Zeitpunkt $t_1$ — vergleiche Fig. 6 — der Transistor 40 leitend wird und die Verbindung zwischen der Diode 43 und dem Masse-potential durch die geschmolzene Sicherung 41 unterbrochen ist, bewirkt das nächste stellungsabhängige Signal am Ausgang 25 des Monoflops 23, daß die Basis des Transistors 44 positives Potential erhält, der Transistor 44 leitet und eine Sicherung 46 in seinem Kollektor-Emitterkreis durchbrennt.

Aus Voranstehendem ergibt sich, daß der Transistor 44 mit der Sicherung 46 zugleich das zweite Schaltglied bildet, welches einen Eingang 47 der Alarmeinrichtung 33 von positivem Potential auf annähernd Null-Potential umschaltet und in dieser Stellung läßt, sobald die Sicherung 46 einmal geschmolzen ist.

Dadurch gerät ein Transistor 48 in den leitenden Zustand, und eine Alarmlampe 49 in seinem Kollektor-Emitterkreis leuchtet dauernd auf.

Die Alarmlampe 49 leuchtet auch auf, wenn die Betriebsspannung unterbrochen wird und erneut nach Erregen des Relais 39 durch Schließen des Schaltkontakts 30 an die Warneinrichtung angelegt wird, da die Schaltglieder, die durch die Sicherungen 41 und 46 realisiert sind, ihre Schaltstellung beibehalten.

**Patentansprüche**

1. Überwachungseinrichtung zur Abgabe eines Warnsignals durch einen Alarmgeber (5; 33) in Abhängigkeit von dem Zählergebnis eines Zählwerks mit mindestens einer Rolle (1), insbesondere eines Kilometerzählers, mit einem ersten Abtastorgan (3), das eine vorgegebene Rollenstellung (Ra 2) zur Abgabe eines ersten stellungsabhängigen Signals erfaßt, dadurch gekennzeichnet, daß zur Abgabe des Warnsignals ab dem zweiten Einlauf der Rolle (1) von der Nullstellung (Ra 1) in die vorgegebene Rollenstellung (Ra 2) eine ebenfalls in Abhängigkeit von der Rollenstellung gesteuerte Aktivierungsschaltungsanordnung (4, 6; 23 bis 29) vorgesehen ist, die vor dem zweiten Einlauf der Rolle (1) in die vorgegebene Rollenstellung (Ra 2) die Abgabe des ersten stellungsabhängigen Signals von dem ersten Abtastorgan (3) oder dessen Weiterleitung an den Alarmgeber (5 bzw. 33) unwirksam macht.

2. Überwachungseinrichtung nach Anspruch 1, dadurch gekennzeichnet, daß die Aktivierungsschaltungsanordnung ein zweites Abtastorgan (4) umfaßt, welches in Drehrichtung der Rolle (1) zwischen der vorgegebenen Rollenstellung (Ra 2) und der Nullstellung (Ra 1) ein zweites stellungsabhängiges Signal abgibt, welches über ein speicherndes Schaltglied (6) das erste Abtastorgan (3) zur anschließenden Abgabe des ersten stellungsabhängigen Signals aktiviert, welches mit dem Alarmgeber (5) in Verbindung steht.

3. Überwachungseinrichtung nach Anspruch 2, dadurch gekennzeichnet, daß das erste Abtastorgan (3) über ein zweites speicherndes Schaltglied (7) mit dem Alarmgeber (5) in Verbindung steht.

4. Überwachungseinrichtung nach den Ansprüchen 2 und 3, dadurch gekennzeichnet, daß jedes speichernde Schaltglied aus einem ersten Transistor (15, bzw. 17) mit einer in der Kollektor-Emitterstrecke angeordneten Sicherung (14 bzw. 18) und einem zweiten Transistor (12 bzw. 21) besteht, dessen Basisanschluß mit einem Verbindungspunkt (15 bzw. 19) der Sicherung mit dem ersten Transistor in Verbindung steht.

5. Überwachungseinrichtung nach Anspruch 1, dadurch gekennzeichnet, daß die Aktivierungsschaltungsanordnung eine speichernde UND-Logikschaltung (27, 28, 29) aufweist, mit einem speichernden ersten Eingang, der mittels eines ersten speichernden Schaltglieds (27) nach Auftreten des durch das von dem ersten Abtastorgan (3) abgegebenen stellungsabhängigen Signals bei dem ersten Einlauf der Rolle (1) in die vorgebene Rollenstellung (Ra 2) vorbereitet wird, und mit einem zweiten Eingang (an 28), der mit dem durch das von dem ersten Abtastorgan (3) abgegebenen stellungsabhängigen Signal bei dem zweiten Einlauf der Rolle (1) in die vorgegebene Rollenstellung (Ra 2) so beaufschlagbar ist, daß die UND-Logikschaltung ein Signal an den Alarmgeber (33) abgibt.

6. Überwachungseinrichtung nach Anspruch 5, dadurch gekennzeichnet, daß die Aktivierungsschaltungsanordnung ein zweites speicherndes Schaltglied (28) dergestalt umfaßt, daß die Signalabgabe an dem Alarmgeber als Dauersignal auch nach Abschalten und erneutem Einschalten der Überwachungseinrichtung erfolgt.

7. Überwachungseinrichtung nach Anspruch 5 und 6, dadurch gekennzeichnet, daß die Aktivierungsschaltungsanordnung ein erstes Monoflop (23) aufweist, welches von dem Abtastorgan (3) ansteuerbar ist, und dessen Ausgang (25) mit einem Eingang eines zweiten Monoflops (24) verbunden ist, dessen Ausgang (26) mit dem Basisanschluß eines ersten Transistors (40) in Verbindung steht, in dessen Kollektor-Emitterstrecke eine Sicherung (41) angeordnet ist, daß der Verbindungspunkt (42) der Sicherung mit dem Transistor über eine erste Diode (43) mit der Basis eines zweiten Transistors (44) gekoppelt ist, mit der außerdem über eine zweite Diode (45) der Ausgang (25) des ersten Monoflops gekoppelt ist, und daß die Kollektor-Emitterstrecke des zweiten Transistors (44), in der ebenfalls eine Sicherung (46) angeordnet ist, mit dem Alarmgeber (33) verbunden ist. .

8. Überwachungseinrichtung nach Anspruch 7, dadurch gekennzeichnet, daß eine Stromversorgungsleitung (50) des ersten, des zweiten und des dritten Transistors gegenüber einer Stromversorgungsleitung (51) zu den Monoflops und dem Abtastorgan so lange verzögert einschaltbar ist, daß die Monoflops nach dem Einschalten ihren Ruhezustand erreicht haben.

9. Überwachungseinrichtung nach einem der vorangehenden Ansprüche, dadurch gekennzeichnet, daß das Abtastorgan (3) als Hall-Generator ausgebildet ist und daß ein Dauermagnet (2) an der abzutastenden Zahlenrolle (1) aus nicht ferromagnetischem Material angebracht ist.

10. Überwachungseinrichtung nach einem der Ansprüche 1 bis 8, gekennzeichnet durch ein fotoelektrisches Abtastorgan.

## Revendications

1. Dispositif de surveillance pourvu d'un émetteur (5, 39) de signal d'alarme, pour émettre un signal d'alarme en fonction du résultat de comptage d'un compteur, tel qu'un totalisateur kilométrique, qui comporte au moins un rouleau (1) associé à un premier organe de détection (3) destiné à réagir à une position prédéterminée (Ra 2) du rouleau, pour émettre un premier signal de position; le dispositif étant caractérisé en ce qu'il comporte un système de circuits d'activation (4, 6; 23 à 29) également asservi à la position du rouleau (1), pour assurer l'emission du signal d'alarme à partir du deuxième passage du rouleau (1) dans la position prédéterminée précitée (Ra 2) à partir de sa position de zéro (Ra 1); le système des circuits d'activation étant agencé pour empêcher l'émission du premier signal de position par le premier organe (3), de détection, ou pour empêcher ce premier signal d'être communiqué à l'émetteur (5, 33) d'alarme, avant le deuxième passage du rouleau (1) dans sa position prédéterminée (Ra 2).

2. Dispositif de surveillance selon la revendication 1, caractérisé en ce que les circuits d'activation comportent un deuxième organe (4) de détection, disposé en regard du rouleau (1) et entre la position prédéterminée précitée (Ra 2) de celui-ci et sa position de zéro (Ra 1), dans le sens la rotation du rouleau; ce deuxième organe (4) de détection étant agencé pour agir par l'intermédiaire d'un interrupteur (6) à mémoire sur le premier organe (3) de détection, qui est relié à l'émetteur (5) d'alarme et prévu pour émettre le premier signal de position, afin de mettre ce premier organe (3) de détection en position active.

3. Dispositif de surveillance selon la revendication 2, caractérisé en ce que le premier organe (3) de détection est relié à l'émetteur (5) d'alarme par l'intermédiaire d'un deuxième interrupteur (7) à mémoire.

4. Dispositif de surveillance selon l'une des revendications 2 ou 3, caractérisé en ce que chacun des interrupteurs (6, 7) à mémoire comporte un premier transistor (15, 17), associé à un fusible (14, 18) monté dans le circuit collecteur-émetteur de ce premier transistor, et un deuxième transistor (12, 21) dont la base est reliée à un point de jonction (15, 18) commun au fusible et au premier transistor.

5. Dispositif de surveillance selon la revendication 1, caractérisé en ce que le système des circuits d'activation comporte un circuit logique ET (27, 28, 29), dont une premiére entrée à mémoire est destinée à être mise en position préparatoire au moyen d'un premier interrupteur (27) à mémoire, après l'arrivée du premier signal de position émis par le premier organe (3) de détection lorsque le rouleau (1) arrive pour la première fois à sa position prédéterminée (Ra 2); et une seconde entrée (reliée à l'élément 28), detinée à recevoir le signal de position émis par le premier organe (3) de détection, lorsque le rouleau (1) passe pour la deuxième fois dans la position de référence précitée (Ra 2), afin que le circuit logique ET envoie un signal de déclenchement à l'émetteur (33) d'alarme. .

6. Dispositif de surveillance selon la revendication 5, caractérisé en ce que le système des circuits d'activation comporte un deuxième interrupteur (28) à mémoire, agencé de manière à rendre permanent le signal produit par l'émetteur d'alarme, même après un arrêt et une nouvelle mise en marche du système de surveillance.

7. Dispositif de surveillance selon l'une des revendications 5 et 6, caractérisé en ce que le système des circuits d'activation comporte une première bascule (23) monostable asservie au premier organe (3) de détection, et dont la sortie (25) est reliée à une entrée d'une deuxième bascule (24) monostable ayant sa sortie (26) raccordée à la base d'un premier transistor (40) associé à un fusible monté dans le circuit collecteur-émetteur de ce transistor; en ce que le point de jonction (42) commun au fusible et au transistor est relié à travers une première diode (43) à la base d'un deuxième transistor (44); la sortie (25) de la première bascule monostable étant également reliée à la base du deuxième transistor (44) à travers une deuxième diode (45); et en ce que le circuit collecteur-émetteur du deuxième transistor (44), dans lequel est également monté un fusible (46), est relié à l'émetteur (33) d'alarme.

8. Dispositif de surveillance selon la revendication 7, caractérisé en ce qu'il comporte des moyens pour mettre sous tension une ligne (50) d'alimentation desservant les premier, deuxième et troisième transistors (43, 44, 45) avec un retard tel par rapport à une ligne (51) d'alimentation des bascules monostables et de l'organe de détection, que les bascules monostables ont pu atteindre leur état stabilisé de repos après cette mise sous tension.

9. Dispositif de surveillance selon l'une des revendications 1 à 8, caractérisé en ce que l'organe (3) de détection est constitué par un générateur à effet Hall, et en ce qu'un aimant permanent (2) en matière non ferromagnétioque est monté sur le rouleau (1) de comptage dont il s'agit de détecter la position.

10. Dispositif de surveillance selon l'une des revendications 1 à 8, caractérisé en ce qu'il comporte un organe de détection photoélectrique.

**Claims**

1. Monitoring system for emitting a warning signal through an alarm emitter (5; 33) in dependence on the counting result of a counting device with at least one roller (1), especially of a kilometer meter, with a first sensor (3) which detects a predetermined roller position (Ra 2) for emitting a first position-dependent signal, characterised in that for emitting the warning signal from the second arrival of the roller (1) at the predetermined roller position (Ra 2) from zero position (Ra 1) there is provided an activation control arrangement (4, 6; 23 to 29) which is also controlled in dependence on the roller position and which before the second arrival of the roller (1) at the predetermined roller position (Ra 2) renders ineffective the emitting of the first position-dependent signal by the first sensor (3) or its transmission on to the alarm emitter (5 or 33).

2. Monitoring system according to claim 1, characterised in that the activation control arrangement comprises a second sensor (4) which in the direction of rotation of the roller (1) between the predetermined roller position (Ra 2) and the zero position (Ra 1) emits a second position-dependent signal which through the agency of a storing switching element (6) activates the first sensor (3) for subsequently emitting the first position-dependent signal, this being connected to the alarm emitter (5).

3. Monitoring system according to claim 2, characterised in that the first sensor (3) is connected to the alarm emitter (5) via a second storing switching element (7).

4. Monitoring system according to claims 2 and 3, characterised in that each storing switching element consists of a first transistor (15, 17 respectively) with a fuse (14, 18 respectively) arranged in the collector-emitter path, and a second transistor (12, 21 respectively) whose base terminal is connected to a junction point (15, 19 respectively) of the fuse with the first transistor.

5. Monitoring system according to claim 1, characterised in that the activation control arrangement comprises a storing AND-logic circuit (27, 28, 29), with a storing first input which is prepared by means of a first storing switching element (27) after the occurrence of the position-dependent signal emitted by the first sensor (3) at the first arrival of the roller (1) at the predetermined roller position (Ra 2), and with a second input (at 28) to which the position-dependent signal emitted by the first sensor (3) can be applied at the second arrival of the roller (1) at the predetermined roller position (Ra 2) in such a manner that the AND-logic circuit emits a signal to the alarm emitter (33).

6. Monitoring system according to claim 5, characterised in that the activation control arrangement comprises a second storing switching element (28) in such a manner that the signal emission at the alarm emitter is effected as a continuous signal even after the monitoring system has been switched off and switched on again.

7. Monitoring system according to claims 5 and 6, characterised in that the activation control arrangement comprises a first monoflop (23) which is actuatable by the sensor (3) and whose output (25) is connected to an input of a second monoflop (24), whose output (26) is connected to the base terminal of a first transistor (40) in the collector-emitter path of which a fuse (41) is arranged, that the junction point (42) of the fuse with the transistor is coupled via a first diode (43) to the base of a second transistor (44), with which base there is also coupled via a second diode (45) the output (25) of the first monoflop, and that the collector-emitter path of the second transistor (44), in which a fuse (46) is also arranged, is connected to the alarm emitter (33).

8. Monitoring system according to claim 7, characterised in that a current supply line (50) of

13   0 045 845   14

the first, second and third transistors is adapted to be switched-in with such a long delay relatively to a current supply line (51) to the monoflops and to the sensor that the monoflops have reached their state of rest after the switching-on operation.

9. Monitoring system according to one of the preceding claims, characterised in that the sensor (3) is constructed as a Hall generator, and that a permanent magnet (2) is arranged at the number roller (1) of non-ferromagnetic material which is to be sensed.

10. Monitoring system according to one of claims 1 to 8, characterised by a photoelectric sensor.

8

FIG. 1

FIG. 2

FIG. 3

FIG. 4

FIG. 5

0 045 845

# FIG. 6